Europäisches Patentamt

European Patent Office

Office européen des brevets

(19)

(11) Numéro de publication: **0 158 308 B1**

(12) **FASCICULE DE BREVET EUROPEEN**

(45) Date de publication du fascicule du brevet:
**15.07.87**

(51) Int. Cl.⁴: **B 65 G 53/46, C 21 B 5/00**

(21) Numéro de dépôt: **85104207.7**

(22) Date de dépôt: **06.04.85**

(54) **Dispositif d'introduction de quantités dosées de matières pulvérulentes dans un fluide de propulsion pneumatique.**

(30) Priorité: **11.04.84 LU 85298**

(43) Date de publication de la demande:
**16.10.85 Bulletin 85/42**

(45) Mention de la délivrance du brevet:
**15.07.87 Bulletin 87/29**

(84) Etats contractants désignés:
**AT BE DE FR GB IT NL SE**

(56) Documents cités:
**EP - A - 0 108 319
DE - A - 2 552 594
GB - A - 20 698
GB - A - 1 094 112
GB - A - 2 086 553
US - A - 3 179 471**

(73) Titulaire: **PAUL WURTH S.A., 32 rue d'Alsace,
L-1122 Luxembourg (LU)**

(72) Inventeur: **Legille, Edouard, 165 rue de Trèves,
Luxembourg (LU)**
Inventeur: **Ulveling, Léon, 30 rue Dr. Jos Peffer, Howald
(LU)**
Inventeur: **Mailliet, Pierre, 1 allée Drosbach, Howald (LU)**

(74) Mandataire: **Meyers, Ernest et al, Office de Brevets
Freylinger & Associés 46 rue du Cimetière B.P. 1153,
L-1011 Luxembourg (LU)**

# Description

La présente invention concerne un dispositif d'introduction de quantités dosées de matières pulvérulentes dans un fluide de propulsion pneumatique, comprenant un boîtier sensiblement cylindrique connecté à une source de fluide sous pression et pourvu d'une ouverture latérale d'entrée en communication avec un réservoir de matières pulvérulentes, dans lequel règne une pression supérieure à celle du fluide de propulsion, ce boîtier renfermant deux douilles coaxiales dont l'une, au moins, est mobile autour de son axe longitudinal et est reliée, à cet effet, à un dispositif d'entraînement approprié, chacune des douilles étant pourvue d'une fente d'entrée au niveau de l'ouverture latérale d'entrée du boîtier de façon que ces fentes puissent plus ou moins chevaucher ou se masquer mutuellement par rotation de la douille mobile et définir ainsi un passage plus ou moins grand entre le réservoir de matières pulvérulentes et l'intérieur du boîtier.

Un dispositif de ce genre est proposé dans la demande de brevet européen EP-A-108319, qui est considérée comme comprise dans l'état de la technique selon l'article SU(3) CBE. Dans ce dispositif, le fluide de propulsion, en l'occurrence de l'air sous pression, traverse et quitte le doseur dans le sens axial en entraînant les matières pulvérulentes introduites par l'ouverture latérale. Le courant de matières pulvérulentes doit, par conséquent, être dévié sensiblement à angle droit lors de la formation du courant pneumatique. Ceci est réalisable dans le cas de matières poudreuses, comme par exemple de la poudre de charbon dont la granulométrie ne dépasse pas 0,1 mm, mais devient de plus en plus problématique au fur et à mesure que la granulométrie augmente. Le problème se pose notamment dans le cas des silicates de calcium (CaSi) injectés dans les bains d'acier en vue de leur affinage. Outre le risque d'une usure prématurée, cette déviation implique successivement un freinage et une accélération des particules pulvérulentes, ce qui se traduit par une perte de vitesse et une limitation de la quantité de matières pouvant traverser le doseur.

Le but de la présente invention est de perfectionner ce type de doseur, de manière à éviter une déviation des matières solides.

Pour atteindre cet objectif, dans le dispositif selon la présente invention le boîtier comporte une ouverture latérale de sortie diamétralement opposée à l'ouverture latérale d'entrée, en ce que chacune des douilles comporte au niveau de cette ouverture de sortie une fente de sortie, la base du boîtier qui est opposée au dispositif d'entraînement de la douille mobile étant fermée par un flasque qui comporte une partie cylindrique s'étendant axialement dans la douille intérieure et pourvue d'un canal diamétral aligné axialement sur les deux ouvertures latérales du boîtier et relié à la source de fluide sous pression.

Le canal diamétral est connecté à la source de fluide sous pression par deux conduites pénétrant à des endroits diamétralement opposés dans ledit canal et qui sont branchées axialement à travers ladite partie cylindrique à la source de fluide sous pression.

Les deux conduites pénètrent de préférence obliquement dans ledit canal de manière à converger en direction de la seconde ouverture du boîtier.

La forme de la section change progressivement en fonction des formes des fentes d'entrée et des fentes de sortie des douilles concentriques.

Dans le dispositif proposé par la présente invention, la matière pulvérulente à véhiculer par l'air sous pression traverse le doseur sans subir de déviation tandis que l'air sous pression subit la déviation sensiblement à angle droit que subissait la matière solide dans les doseurs connus.

D'autres particularités et caractéristiques ressortiront de la description détaillée d'un mode de réalisation avantageux présenté, ci-dessous, à titre d'illustration, en référence aux figures annexées, dans lesquelles:

la figure 1 montre schématiquement une coupe longitudinale à travers le dispositif de dosage selon l'invention,

la figure 2 montre schématiquement une coupe transversale au niveau des fentes de dosage en position fermée, et

la figure 3 montre une vue analogue à celle de la figure 2 en position ouverte.

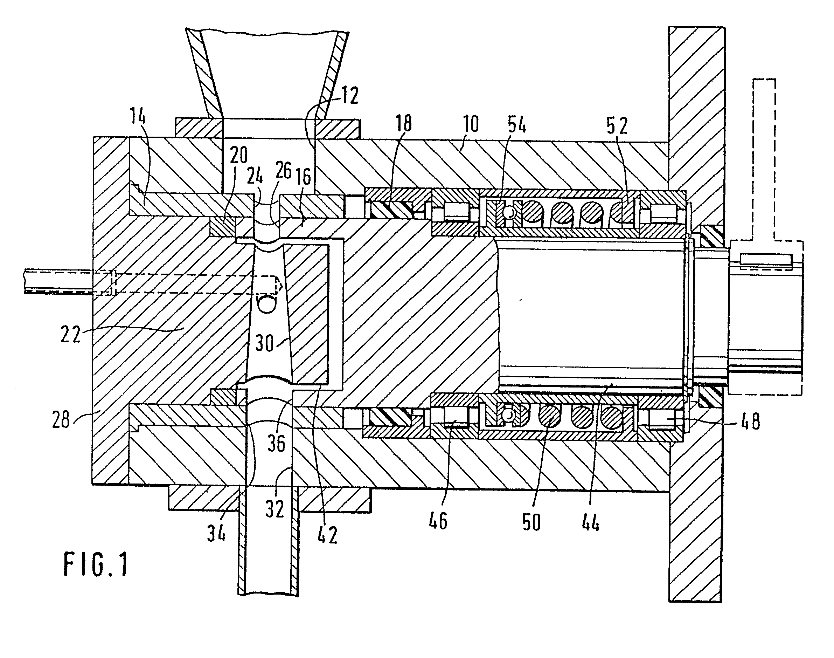

Le doseur de la figure 1 comporte un boîtier 10, pourvu d'une ouverture latérale 12 raccordée à un réservoir sous pression contenant des matières pulvérulentes. A l'intérieur du boîtier se trouve une douille fixe 14 solidaire du boîtier 10 et à l'intérieur de cette douille fixe 14 une douille rotative 16. Cette dernière est comparable à la douille mobile décrite dans la demande de brevet européen précitée EP-A-108319 et elle est reliée à un mécanisme pour lui imposer une rotation continue autour de son axe longitudinal. Un joint 18 assure l'étanchéité entre cette douille mobile 16 et le boîtier 10. La partie frontale de la douille mobile 16 frotte contre une bague de frottement 20 comme dans la demande de brevet EP-A-108319. Les deux douilles 14 et 16 sont également pourvues de fentes de dosage 24, 26, dont le fonctionnement est expliqué dans la demande de brevet précitée et ne sera plus décrit en détail dans le contexte de la présente invention.

Toutefois, contrairement à l'opération des doseurs connus, la matière pulvérulente traverse le nouveau doseur montré sur la figure 1 en ligne droite sans déviation. A cet effet, le flasque frontal 28 du boîtier 10 comporte une partie cylindrique 22 qui pénètre dans la douille intérieure jusqu'au-delà des fentes 24, 26 et qui est pourvue au niveau de ces fentes 24, 26 d'un canal diamétral 30.

Le boîtier 10 comporte, en outre, une ouverture de sortie 32 disposée à un endroit diamétralement opposé par rapport à l'ouverture d'entrée 12. Les douilles 14 et 16 sont également pourvues de fentes ou ouvertures 34, 36 à des endroits diamétralement opposés aux fentes 24, 26 de sorte que dans une position angulaire prédéterminée de la douille mobile 16, il existe une communication directe entre l'ouverture d'entrée 12 et l'ouverture de sortie 32, cette communication étant plus ou moins réduite, jusqu'à l'interruption totale, par une rotation de la douille mobile 16.

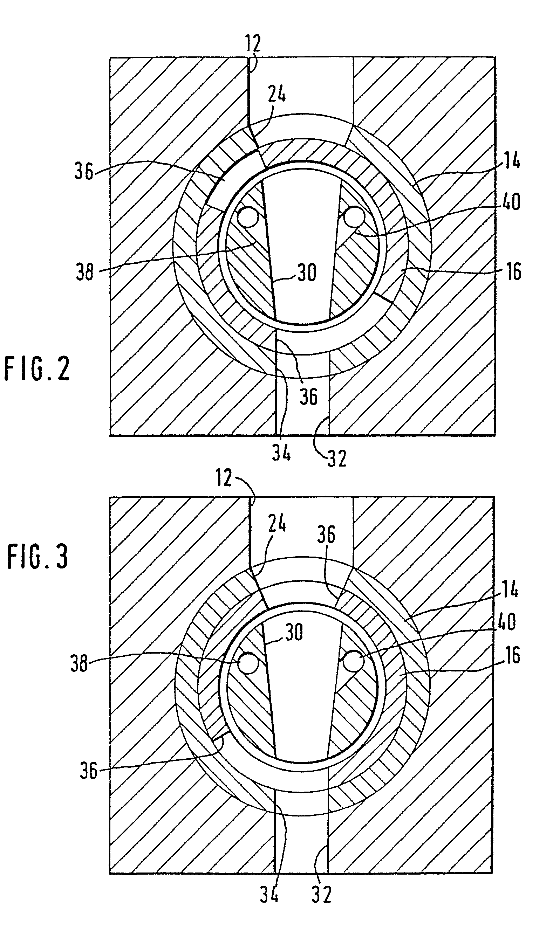

Dans la position de la douille mobile selon la figure 2, la fente 24 de la douille fixe 14 est complètement masquée, de sorte que le passage est fermé. Il est à noter que la fente de sortie 36 de la douille rotative 16 est plus longue que la fente d'entrée pour permettre le passage de l'air sous pression en position fermée selon la figure 2.

Une rotation de la douille 16 à partir de la position de la figure 2, dans le sens des aiguilles d'une montre, ouvre progressivement le passage à la matière pulvérulente jusqu'à la section maximale de la figure 3.

L'air sous pression est admis dans le canal 30 par deux conduites 38, 40 pénétrant axialement à travers le flasque 28 et la partie cylindrique 22 jusqu'au niveau du canal 30 pour déboucher symétriquement et obliquement dans celui-ci.

Un espace annulaire est aménagé entre la douille intérieure 16 et la partie cylindrique 22, car une étanchéité n'est pas nécessaire à cet endroit et, en outre, pour être certain d'éviter tout grippage, cet espace est relativement large.

Il est à noter que l'ouverture de sortie 34 a une section circulaire conformément à la section de la conduite de transport pneumatique en aval du doseur. Or, étant donné que les fentes 24 et 26 ont une forme allongée, la forme de la section du canal 30 change progressivement pour s'adapter, d'une part aux fentes 24 et d'autre part à l'ouverture circulaire 24. Par suite de l'augmentation de vitesse du mélange de matières pulvérulentes et de gaz de transport, la section du canal 30 peut être à la sortie sensiblement inférieure à celle de l'entrée.

La douille mobile 16 fait partie d'un arbre plein 44 logé coaxialement dans le boîtier 10 par l'intermédiaire d'une paire de roulements 46, 48, de façon à pouvoir tourner autour de son axe longitudinal. Entre les roulements 46, 48 se trouve un ressort de compression 50 prenant appui, d'une part sur un épaulement circulaire intérieur 52 du boîtier 10 et un épaulement circulaire extérieur 54 de l'arbre 44 d'autre part. Les épaulements 52 et 54 peuvent également, comme montré sur la figure, être prévus sur des gaines séparées glissées respectivement dans le boîtier 10 et sur l'arbre 44. L'action de ce ressort 50 tend à pousser l'arbre 44 vers la gauche sur la figure 1, c'est-à-dire à maintenir la douille 16 en appui sur la bague 20 et à compenser une usure éventuelle de celle-ci. Pour que l'action du ressort 50 ait de l'effet, il faut bien entendu que l'arbre 44 soit libre dans le sens axial. C'est la raison pour laquelle les éléments des roulements 46, 48 sont des rouleaux ou des aiguilles.

A l'extérieur du boîtier 10, l'arbre 44 est actionné par un mécanisme approprié pour le faire tourner autour de son axe longitudinal afin de réduire ou d'agrandir l'ouverture du passage au niveau des fentes 24, 26.

## Revendications

1. Dispositif d'introduction de quantités dosées de matières pulvérulentes dans un fluide de propulsion pneumatique comprenant un boîtier (10) sensiblement cylindrique et connecté à une source de fluide sous pression et pourvu d'une ouverture latérale d'entrée (12) en communication avec un réservoir de matières pulvérulentes, dans lequel règne une pression supérieure à celle du fluide de propulsion, ce boîtier renfermant deux douilles coaxiales (14, 16) dont l'une, au moins, est mobile autour de son axe longitudinal et est reliée, à cet effet, à un dispositif d'entraînement approprié, chacune des douilles (14, 16) étant pourvue d'une fente d'entrée (24, 26) au niveau de l'ouverture latérale d'entrée (12) du boîtier (10) de façon que ces fentes (24, 26) puissent plus ou moins chevaucher ou se masquer mutuellement par rotation de la douille mobile (16) et définir ainsi un passage plus ou moins grand entre le réservoir de matières pulvérulentes et l'intérieur du boîtier (10), le boîtier (10) comportant une ouverture latérale d'entrée (32) diamétralement opposée à l'ouverture latérale d'entrée, chacune des douilles (14, 16) comportant au niveau de cette ouverture de sortie (32) une fente de sortie (34, 36), la base du boîtier (10) qui est opposée au dispositif d'entraînement de la douille mobile (16) étant fermée par un flasque (28) qui comporte une partie cylindrique (22) s'étendant axialement dans la douille intérieure (16) et pourvu d'un canal diamétral (30) aligné axialement sur les deux ouvertures latérales (12, 32) du boîtier (10) et relié à la source de fluide sous pression.

2. Dispositif selon la revendication 1, caractérisé en ce que le canal diamétral (3) est connecté à la source de fluide sous pression par deux conduites (38, 40) pénétrant à des endroits diamétralement opposés dans ledit canal (30) et qui sont branchés axialement à travers la partie cylindrique (22) à la source de fluide sous pression.

3. Dispositif selon la revendication 2, caractérisé en ce que les deux conduites (38, 40) pénètrent obliquement dans ledit canal (30) de manière à converger en direction de l'ouverture de sortie (32) du boîtier (10).

4. Dispositif selon la revendication 1, caractérisé en ce que la forme de la section du canal diamétral (30) change progressivement en fonction des formes des fentes d'entrée (24, 26) et des fentes de sortie (34, 36) des douilles concentriques (14, 16).

5. Dispositif selon l'une des revendications 1 à 4, caractérisé en ce que la douille mobile (16) fait partie d'un arbre plein (44) logé coaxialement dans le boîtier (10) par l'intermédiaire d'une paire de roulements (46, 48) à rouleaux ou aiguilles entre lesquels se trouve un ressort de compression (50) prenant appui, d'un côté sur l'épaulement circulaire intérieur (52) du boîtier (10) et du côté opposé, sur un épaulement circulaire extérieur (54) de l'arbre (44).

## Patentansprüche

1. Vorrichtung zum Einspeisen dosierter Mengen pulverförmiger Stoffe in ein pneumatisches Transportfluid, umfassend ein im wesentlichen zylindrisches Gehäuse (10), welches an eine Druckfluidquelle angeschlossen und mit einer seitlichen Eintrittsöffnung (12) versehen ist, die ihrerseits mit einem Vorratsbehälter für pulverförmige Stoffe, in welchem ein höherer Druck herrscht als derjenige des Transportfluids, angeschlossen ist, wobei dieses Gehäuse innen zwei koaxiale Hülsen (14, 16) aufweist von denen mindestens eine um ihre Längsachse drehbar und zu diesem Zweck mit einer geeigneten Betätigungsvorrichtung verbunden ist, und jede dieser Hülsen (14, 16) mit einem Eintrittsspalt (24, 26) im Bereich der seitlichen Eintrittsöffnung (12) des Gehäuses (10) so versehen ist, dass diese Spalte (24, 26) sich durch Drehen der drehbaren Hülse (16) in mehr oder weniger grossen Masse gegenseitig überlappen, bzw. verdecken und so einen mehr oder weniger grossen Durchlass zwischen dem Vorratsbehälter für pulverförmige Stoffe und dem Innern des Gehäuses (10) definieren, das Gehäuse (10) eine seitliche, der seitlichen Eintrittsöffnung (12) diametral gegenüberliegende Austrittsöffnung (32) aufweist, jede der Hülsen (14, 16) im Bereich dieser Austrittsöffnung (32) einen Austrittsspalt (34, 36) besitzt, die von der Betätigungsvorrichtung für die drehbaren Hülse (16) abgewandte Basis des Gehäuses (10) durch einen Flansch (28) verschlossen ist, welcher einen zylindrischen, sich axial in der inneren Hülse erstreckenden Abschnitt (22) aufweist und mit einem transversalen, axial mit den beiden seitlichen Öffnungen (12, 32) des Gehäuses (10) fluchtenden Kanal (30) versehen ist, welcher an die Druckfluidquelle angeschlossen ist.

2. Vorrichtung nach Anspruch 1, dadurch gekennzeichnet, dass der transversale Kanal (30) an die Druckfluidquelle durch zwei Leitungen (38, 40) angeschlossen ist, welche an diametral gegenüber liegenden Stellen in den Kanal (30) eintreten und axial durch den zylindrischen Abschnitt (22) hindurch an die Druckfluidquelle angeschlossen sind.

3. Vorrichtung nach Anspruch 2, dadurch gekennzeichnet, dass die beiden Leitungen (38, 40) solcherart schräg in den genannten Kanal (30) eintreten, dass sie in Richtung der Austrittsöffnung (32) des Gehäuses (10) konvergieren.

4. Vorrichtung nach Anspruch 1, dadurch gekennzeichnet, dass die Querschnittsform des transversalen Kanals (30) sich progressiv in Funktion der Formen der Eintrittspalte (24, 26) und der Austrittspalte (34, 36) der konzentrischen Hülse (14, 16) ändert.

5. Vorrichtung nach einen beliebigen der Ansprüche 1 bis 4, dadurch gekennzeichnet, dass die drehbare Hülse (16) teil einer Vollwelle (44) ist, welche unter Zwischenschaltung von zwei Wälzlagern (46, 48) mit Zylinderrollen oder Nadeln koaxial im Gehäuse (10) gelagert ist, wobei zwischen den beiden Lagern (46, 48) eine Druckfeder (50) vorgesehen ist, welche sich einerseits an einer inneren Ringschulter (52) des Gehäuses (10) abstützt und andererseits an einer äusseren Ringschulter (54) der Welle (44).

## Claims

1. Apparatus for introducing dosed quantities of pulverulent materials into a pneumatic propulsion fluid, comprising a substantially cylindrical box (10) connected to a source of fluid under pressure and provided with a first lateral inlet orifice (12) in communication with a reservoir for pulverulent materials, in which a pressure prevails which is above that of the propulsion fluid, the said box containing two coaxial sockets (14, 16) of which at least one is movable about its longitudinal axis and is connected for this purpose to a suitable driving device, the sockets (14, 16) having inlet slits (24, 26) facing the lateral inlet orifice (12) of the box (10) in such a way that by rotating the movable socket (16), these slits (24, 26) can be made to overlap to a greater or smaller extent or mask each other, thus defining a wider or narrower passage between the reservoir for the pulverulent materials and the interior of the box (10), wherein the box (10) comprises a lateral outlet orifice (32) diametrically opposed to the lateral inlet orifice, wherein each of the sockets (14, 16) is provided, on a level with this outlet orifice (32) with an outlet slit (34, 36), wherein the base belonging to the box (10) and opposite the driving device of the movable socket (16) is closed by a cheek (28) comprising a cylindrical portion (22) and extending axially into the inner socket (16) and having a diametrical channel (30) axially aligned with the two lateral orifices (12, 32) of the box (10) and connected to the source of liquid under pressure.

2. Apparatus in accordance with Claim 1, characterized by the fact that the diametral channel (30) is connected to the source of fluid under pressure by two pipes (38, 40) penetrating at diametrically opposite points into the said channel (30) and axially connected through the aforementioned cylindrical portion (22) to the source of fluid under pressure.

3. Apparatus in accordance with Claim 2, characterized by the fact that the two conduits (38, 40) penetrate obliquely into the said channel (30) in such a way as to converge in the direction of the outlet orifice (32) of the box (10).

4. Apparatus in accordance with Claim 1, characterized by the fact that the shape of the cross section of the diametral channel (30) changes progressively in accordance with the shapes of the inlet slits (24, 26) and the outlet slits (34, 36) of the concentric sockets (14, 16).

5. Apparatus in accordance with any one of Claims 1-4, characterized by the fact that the movable socket (16) forms part of a solid shaft (44) mounted coaxially in the box (10) by means of a pair of roller or needle bearings (46, 48) between which is provided a compression spring (50) resting at one end of the internal circular shoulder (52) of the box and at the opposite end on an external circular shoulder (54) of the shaft (44).

FIG.1

0 158 308

FIG.2

FIG.3